# EUROPÄISCHE PATENTSCHRIFT

(11) **EP 3 303 730 B1**
(45) Veröffentlichungstag und Bekanntmachung des Hinweises auf die Patenterteilung: **27.03.2019**
(21) Anmeldenummer: 16714900.4
(22) Anmeldetag: 07.04.2016
(51) Int. Cl.: E04G 1/14, E04G 1/38, E04G 5/04, E04G 5/06, E04G 7/02, E04G 7/22, F16B 7/00

(54) **GERÜST MIT GERÜSTHALTERAUFNAHME UND VERWENDUNG EINER AUSNEHMUNG IN EINEM GERÜSTSTIEL**
SCAFFOLD WITH SCAFFOLD HOLDER RECEPTACLE AND USE OF AN APERTURE IN A SCAFFOLD POLE
ÉCHAFAUDAGE COMPRENANT UN LOGEMENT DE RETENUE D'ÉCHAFAUDAGE ET UTILISATION D'UN ÉVIDEMENT DANS UN MONTANT D'ÉCHAFAUDAGE

(30) Priorität: 27.05.2015 DE 102015209735
(43) Veröffentlichungstag der Anmeldung: 11.04.2018
(73) Patentinhaber: Peri GmbH, 89264 Weissenhorn (DE)
(72) Erfinder: MIKIC, Erzad, 76185 Karlsruhe (DE)
(74) Vertreter: Kohler Schmid Möbus Patentanwälte
(86) Internationale Anmeldenummer: PCT/EP2016/057551
(87) Internationale Veröffentlichungsnummer: WO 2016/188660

(56) Entgegenhaltungen:
- AU-B2- 553 886
- DE-A1- 3 218 046
- JP-A- 2006 219 823
- JP-U- H03 126 958
- JP-Y1- S50 907
- US-A- 2 435 461
- US-A- 2 593 122

## Beschreibung

Die Erfindung betrifft ein Fassadengerüst, umfassend einen Innenstiel, einen Außenstiel und einen Querriegel zwischen dem Innenstiel und dem Außenstiel.

Gerüste, auf denen oder in deren Umgebung sich Personen aufhalten, müssen gegen Umfallen und Einstürzen gesichert werden. Gerüste, die an Fassaden aufgestellt werden, können zur Sicherung gegen Umfallen und Einstürzen mit der Fassade verbunden werden. Dazu werden sogenannte Gerüsthalter an der Fassade verankert und an dem Gerüst befestigt. Üblicherweise werden Gerüsthalter in einem Bereich unterhalb von Querriegeln, die einen Gerüstbelag tragen, angeordnet.

Es ist allgemein bekannt, einen im Wesentlichen zylinderrohrförmigen Gerüsthalter mittels einer Normkupplung an einem zylinderrohrförmigen Gerüststiel zu befestigen. Die Normkupplung weist dazu zwei Schellenabschnitte auf, die rechtwinklig zueinander ausgerichtet sind. Die jeweiligen Schellenabschnitte umgreifen den Gerüsthalter bzw. den Gerüststiel. An jedem Schellenabschnitt der Normkupplung ist eine Klemmschraube angeordnet, durch die der jeweilige Schellenabschnitt an dem Gerüsthalter bzw. an dem Gerüststiel festgeklemmt werden kann.

Ein einzelner Gerüsthalter kann einstielig, d. h. nur an einem Gerüststiel, nämlich einem fassadennahen Innenstiel, mit dem Gerüst verbunden werden. Ein einzelner einstieliger Gerüsthalter kann nur Lasten in seiner Erstreckungsrichtung, meist näherungsweise rechtwinklig zu der Fassade und rechtwinklig zu einer Längsrichtung des Gerüsts, aufnehmen.

Um auch Lasten parallel zu der Fassade aufnehmen zu können, ist es bekannt, einen einzelnen Gerüsthalter zweistielig, d.h. sowohl mit dem Innenstiel als auch mit einem fassadenfernen Außenstiel, mit jeweils einer Normkupplung mit dem Gerüst zu verbinden. Alternativ können zwei Gerüsthalter in der Art eines Dreiecksankers an dem Gerüst angeordnet werden, wobei die beiden Gerüsthalter unter einem Winkel von ca. 90° zueinander und je ca. 45° zu der Fassade ausgerichtet werden. Die beiden Gerüsthalter können dazu mit jeweils einer Normkupplung an dem Innenstiel befestigt werden. Alternativ kann ein erster Gerüsthalter mit einer Normkupplung an dem Innenstiel befestigt werden und der zweite Gerüsthalter wird mit einer weiteren Normkupplung an dem ersten Gerüsthalter befestigt. Nachteilig an den vorgenannten Arten der Gerüstverankerung ist zunächst der erhebliche Montageaufwand, der insbesondere durch die Notwendigkeit des Anziehens von zwei Klemmschrauben pro Normkupplung entsteht. Beim manuellen Anziehen der Klemmschrauben besteht auch eine Gefahr der Fehlbedienung im Sinne eines zu schwachen oder zu starken Anziehens der Klemmschrauben. Weiterhin wird bei zweistieligen Gerüsthaltern eine Durchgangshöhe über einem Gerüstbelag durch den quer durch das Gerüst verlaufenden Gerüsthalter empfindlich eingeschränkt, da der Gerüsthalter aufgrund des Platzbedarfs der Normkupplungen von einem oberhalb des Gerüsthalters angeordneten Querriegel beabstandet angeordnet werden muss.

Das Dokument DE 3218046 offenbart alle Merkmale des Oberbegriffs des Anspruchs 1.

### Aufgabe der Erfindung

Der Erfindung liegt die Aufgabe zugrunde, den Montagevorgang eines Gerüsthalters an einem Gerüst zu vereinfachen und zu beschleunigen. Weiterhin soll bei einem zweistieligen Gerüsthalter die Durchgangshöhe unter dem Gerüsthalter vergrößert werden.

### Kurze Beschreibung der Erfindung

Diese Aufgabe wird durch ein Gerüst mit den Merkmalen des Patentanspruchs 1 gelöst. Die Unteransprüche geben bevorzugte Weiterbildungen wieder.

Diese Aufgabe wird gelöst durch ein Gerüst der eingangs bezeichneten Art, das dadurch gekennzeichnet ist, dass der Innenstiel in einem hohlen, insbesondere hohlzylindrischen, Stielabschnitt eine erste Aufnahme-Durchgangsausnehmung für eine Kupplung zum Anbinden eines Gerüsthalters aufweist, und dass ein maximaler Abstand der ersten Aufnahme-Durchgangsausnehmung von einer Oberseite des Querriegels höchstens 300 mm beträgt, wobei die erste Aufnahme-Durchgangsausnehmung
a) unterhalb der Oberseite des Querriegels angeordnet ist, oder
b) oberhalb der Oberseite des Querriegels als ein erstes Langloch ausgebildet ist.

Die erste Aufnahme-Durchgangsausnehmung ermöglicht es, die Kupplung auf einfache Weise an dem Innenstiel zu befestigen. Die Kupplung kann dazu vorzugsweise in der ersten Aufnahme-Durchgangsausnehmung eingehakt (verrastet) werden, so dass sie eine Wandung des Stielabschnitts hintergreift. Die Kupplung ist bevorzugt als eine Halbkupplung ausgebildet. Als Aufnahme-Durchgangsausnehmung wird hier eine Ausnehmung bezeichnet, die eine Wandung eines hohlen Gerüststiels, insbesondere des Innenstiels, einseitig durchbricht, so dass eine Verbindung zu einem Innenraum des Gerüststiels eröffnet wird. Vorzugsweise ist auch eine unterhalb der Oberseite des Querriegels angeordnete erste Aufnahme-Durchgangsausnehmung als ein erstes Langloch ausgebildet, wobei die Längsachse des ersten Langlochs vorzugsweise parallel zur Stiellängsachse des hohlzylindrischen Stielabschnitts ausgerichtet ist. Die Ausbildung der ersten Aufnahme-Durchgangsausnehmung als erstes Langloch kann das Einhaken der Kupplung weiter erleichtern. Gleichzeitig kann durch das erste Langloch automatisch eine definierte Ausrichtung der Kupplung eingerichtet werden.

Durch das Einhaken der Kupplung entfällt der zeitaufwendige und fehleranfällige Prozess des Anziehens einer Klemmschraube, wie sie an einer üblichen Normkupplung verwendet wird, um die Normkupplung an dem Innenstiel zu befestigen. Durch ein erfindungsgemäßes Gerüst kann daher Zeit beim Aufbau des Gerüsts eingespart werden. Gleiches gilt analog für die Demontage, bei der das Lösen der Klemmschraube entfällt. Stattdessen kann die Kupplung aus dem Innenstiel ausgehakt werden. Vorzugsweise ist an der Kupplung und/oder an dem Innenstiel ein Sicherungselement angeordnet, das ein unbeabsichtigtes Aushaken der Kupplung verhindert.

Indem Anziehen und Lösen einer Klemmschraube einer Normkupplung zur Befestigung der Normkupplung an dem Innenstiel erfindungsgemäß vermieden werden, entfällt auch der Platzbedarf zur Handhabung der Klemmschraube, insbesondere vermittels eines Schraubenschlüssels. Es ist daher möglich, die Kupplung näher an einem Querriegel und/oder einem Gerüstbelag an dem Innenstiel anzuordnen. Der maximale Abstand der ersten Aufnahme-Durchgangsausnehmung von einer Oberseite des Querriegels beträgt dabei bevorzugt höchstens 200 mm, besonders bevorzugt höchstens 100 mm, ganz besonders bevorzugt höchstens 60 mm. Der maximale Abstand wird parallel zu der Stiellängsachse gemessen. Da die Kupplung näher an dem Querriegel befestigt werden kann, kann auch der Kraftfluss in dem Innenstiel verbessert werden. Eine Biegebelastung des Innenstiels aufgrund von quer zu dem Innenstiel durch den Gerüsthalter eingeleitete Kräfte kann dadurch verringert werden, dass der Abstand zwischen Gerüsthalter und Querriegel reduziert wird.

Bei einem aufgebauten Gerüst ist der Innenstiel einer Fassade zugewandt; der Außenstiel ist im aufgebauten Zustand des Gerüsts der Fassade abgewandt. Wenn das Gerüst einteilige Einheiten mit beidseitig an dem Querriegel unlösbar befestigten Stielsegmenten umfasst, umfasst der Innenstiel vorzugsweise das kürzere der beiden Stielsegmente, sofern die beiden Stielsegmente unterschiedliche Längen aufweisen.

Vorzugsweise ist die erste Aufnahme-Durchgangsausnehmung derart an dem Innenstiel angeordnet, dass sie die Wandung des Innenstiels in einer radialen Richtung durchbricht. Bevorzugt ist die radiale Richtung zumindest näherungsweise orthogonal zu dem Querriegel und damit parallel zu der Fassade ausgerichtet. Die erste Aufnahme-Durchgangsausnehmung weist dann näherungsweise in eine zu der Fassade parallele Längsrichtung des Gerüsts auf eine Stirnseite des Gerüsts zu. Die Lasteinleitung von dem Gerüsthalter über die Kupplung in den Innenstiel erfolgt im Wesentlichen in einer zu der radialen Richtung der ersten Aufnahme-Durchgangsausnehmung orthogonalen Richtung, insbesondere entlang einer Erstreckungsrichtung des Gerüsthalters.

Die erste Aufnahme-Durchgangsausnehmung gilt als oberhalb der Oberseite des Querriegels angeordnet, wenn zumindest ein Teilabschnitt der ersten Aufnahme-Durchgangsausnehmung oberhalb der Oberseite des Querriegels angeordnet ist. Ansonsten gilt die erste Aufnahme-Durchgangsausnehmung als unterhalb der Oberseite des Querriegels angeordnet.

Bei einer bevorzugten Ausführungsform des erfindungsgemäßen Gerüsts ist vorgesehen, dass gegenüber der ersten Aufnahme-Durchgangsausnehmung eine zweite Aufnahme-Durchgangsausnehmung in dem Stielabschnitt des Innenstiels
a) unterhalb der Oberseite des Querriegels angeordnet ist, oder
b) oberhalb der Oberseite des Querriegels als ein zweites Langloch ausgebildet ist, wobei die Längsachse des zweiten Langlochs vorzugsweise parallel zur Stiellängsachse des hohlzylindrischen Stielabschnitts ausgerichtet ist.

Es wird dadurch die Flexibilität beim Aufbau des Gerüsts erhöht, indem die Kupplung beiderseits des Innenstiels angeordnet werden kann. Gegenüber bedeutet vorzugsweise auf gleicher Höhe entlang der Stiellängsachse und diametral bezüglich der Stiellängsachse. Vorzugsweise ist die zweite Aufnahme-Durchgangsausnehmung wie die erste Aufnahme-Durchgangsausnehmung ausgebildet, insbesondere in der gleichen Form und gleich groß. Typischerweise fluchten die erste Aufnahme-Durchgangsausnehmung und die zweite Aufnahme-Durchgangsausnehmung. Es wird dann auch ermöglicht, den Innenstiel spiegelsymmetrisch zu einer die Stiellängsachse enthaltenden Ebene auszubilden, so dass beim Einbau des Innenstiels nicht auf dessen Ausrichtung bezüglich dieser Ebene geachtet werden muss (falls der Innenstiel nicht unlösbar mit dem Querriegel verbunden ist).

Besonders bevorzugt ist eine Ausführungsform, bei der vorgesehen ist, dass der Außenstiel in einem hohlzylindrischen Stielabschnitt eine dritte Aufnahme-Durchgangsausnehmung für die Kupplung aufweist, und dass ein maximaler Abstand der dritten Aufnahme-Durchgangsausnehmung von einer Oberseite des Querriegels höchstens 190 mm beträgt. Der maximale Abstand der dritten Aufnahme-Durchgangsausnehmung von einer Oberseite des Querriegels beträgt bevorzugt höchstens 150 mm, besonders bevorzugt höchstens 100 mm, ganz besonders bevorzugt höchstens 60 mm. Vorzugsweise ist die dritte Aufnahme-Durchgangsausnehmung als ein drittes Langloch ausgebildet, wobei die Längsachse des dritten Langlochs insbesondere parallel zur Stiellängsachse des hohlzylindrischen Stielabschnitts ausgerichtet ist. Vorteilhaft ist die dritte Aufnahme-Durchgangsausnehmung wie die erste Aufnahme-Durchgangsausnehmung ausgebildet, insbesondere in der gleichen Form und gleich groß. Durch die dritte Aufnahme-Durchgangsausnehmung wird ermöglicht, einen Gerüsthalter zweistielig, d.h. an dem Innenstiel und an dem Außenstiel, an dem Gerüst zu befestigen. Es können dann über den zweistieligen Gerüsthalter auch Lasten parallel zu der Fassade aufgenommen und in die Fassade abgeleitet werden.

Vorteilhaft ist eine Weiterbildung dieser Ausführungsform, bei der gegenüber der dritten Aufnahme-Durchgangsausnehmung eine vierte Aufnahme-Durchgangsausnehmung in dem Außenstiel ausgebildet ist. Es kann dadurch die Flexibilität beim Aufbau des Gerüsts erhöht werden, indem die Kupplung beiderseits des Außenstiels angeordnet werden kann. Vorzugsweise ist die vierte Aufnahme-Durchgangsausnehmung als ein viertes Langloch ausgebildet, wobei die Längsachse des vierten Langlochs insbesondere parallel zur Stiellängsachse des hohlzylindrischen Stielabschnitts ausgerichtet ist. Vorteilhaft ist die vierte Aufnahme-Durchgangsausnehmung wie die dritte Aufnahme-Durchgangsausnehmung ausgebildet, insbesondere in der gleichen Form und gleich groß. Vorzugsweise fluchten die dritte Aufnahme-Durchgangsausnehmung und die vierte Aufnahme-Durchgangsausnehmung. Vorzugsweise kann der Außenstiel spiegelsymmetrisch zu einer die Stiellängsachse enthaltenden Ebene ausgebildet werden, sodass beim Einbau des Außenstiels nicht auf dessen Ausrichtung bezüglich dieser Ebene geachtet werden muss.

Vorteilhaft ist ein Gerüst, bei dem vorgesehen ist, dass entlang der Stiellängsachse von der ersten Aufnahme-Durchgangsausnehmung beabstandet eine fünfte Aufnahme-Durchgangsausnehmung in dem Innenstiel ausgebildet ist, und dass ein maximaler Abstand der fünften Aufnahme-Durchgangsausnehmung von der Oberseite des Querriegels höchstens 300 mm, bevorzugt höchstens 200 mm, besonders bevorzugt höchstens 100 mm, ganz besonders bevorzugt höchstens 60 mm beträgt. Vorzugsweise ist die fünfte Aufnahme-Durchgangsausnehmung als ein fünftes Langloch ausgeführt, wobei die Längsachse des fünften Langlochs insbesondere parallel zur Stiellängsachse des hohlzylindrischen Stielabschnitts ausgerichtet ist. Dadurch kann die Flexibilität bei der Anordnung des Gerüsthalters an dem Gerüst weiter erhöht werden. Die erste Aufnahme-Durchgangsausnehmung und die fünfte Aufnahme-Durchgangsausnehmung können beide oberhalb oder beide unterhalb des Querriegels angeordnet sein; alternativ kann die erste Aufnahme-Durchgangsausnehmung unterhalb des Querriegels und die fünfte Aufnahme-Durchgangsausnehmung oberhalb des Querriegels oder die erste Aufnahme-Durchgangsausnehmung oberhalb des Querriegels und die fünfte Aufnahme-Durchgangsausnehmung unterhalb des Querriegels angeordnet sein. Vorteilhaft ist die fünfte Aufnahme-Durchgangsausnehmung wie die erste Aufnahme-Durchgangsausnehmung ausgebildet, insbesondere in der gleichen Form und gleich groß. Vorzugsweise fallen die Längsachsen eines ersten Langlochs und des fünften Langlochs zusammen.

Vorteilhaft ist vorgesehen, dass gegenüber der fünften Aufnahme-Durchgangsausnehmung eine sechste Aufnahme-Durchgangsausnehmung in dem Stielabschnitt des Innenstiels ausgebildet ist. Vorzugsweise ist die sechste Aufnahme-Durchgangsausnehmung als ein sechstes Langloch ausgeführt ist, wobei die Längsachse des sechsten Langlochs insbesondere parallel zur Stiellängsachse des hohlzylindrischen Stielabschnitts ausgerichtet ist. Es kann dadurch die Flexibilität beim Aufbau des Gerüsts erhöht werden, indem die Kupplung beiderseits des Außenstiels angeordnet werden kann. Vorteilhaft ist die sechste Aufnahme-Durchgangsausnehmung wie die fünfte Aufnahme-Durchgangsausnehmung ausgebildet, insbesondere in der gleichen Form und gleich groß. Vorzugsweise fluchten die fünfte Aufnahme-Durchgangsausnehmung und die sechste Aufnahme-Durchgangsausnehmung. Es kann dann auch ermöglicht werden, den Innenstiel spiegelsymmetrisch zu einer die Stiellängsachse enthaltenden Ebene auszubilden, so dass beim Einbau des Innenstiels nicht auf dessen Ausrichtung bezüglich dieser Ebene geachtet werden muss.

An dem Innenstiel können somit oberhalb und/oder unterhalb der Oberseite des Querriegels jeweils bis zu zwei (Paare von gegenüberliegenden) voneinander beabstandete(n) Aufnahme-Durchgangsausnehmungen ausgebildet sein. Insbesondere kann dabei eine Aufnahme-Durchgangsausnehmung auch zwischen der Oberkante und einer Unterkante des Querriegels angeordnet sein. Alternativ kann eine Aufnahme-Durchgangsausnehmung näherungsweise auf Höhe der Oberkante oder der Unterkante des Querriegels angeordnet sein.

Erfindungsgemäß, umfasst das Gerüst eine Kupplung zum Anbinden eines Gerüsthalters und ein Fixierelement zum Befestigen der Kupplung an dem Stielabschnitt, wobei das Fixierelement unverlierbar an der Kupplung gehalten ist. Es kann dadurch die Handhabung der Kupplung weiter vereinfacht und deren Montage an dem Innenstiel und/oder Außenstiel weiter beschleunigt werden.

Besonders bevorzugt ist eine Weiterbildung, bei der vorgesehen ist, dass das Fixierelement in seiner ersten Stellung in die erste Aufnahme-Durchgangsausnehmung einführbar ist und dass das Fixierelement in seiner zweiten Stellung eine Wandung des Stielabschnitts an zwei gegenüberliegenden Seiten der ersten Aufnahme-Durchgangsausnehmung hintergreift. Dadurch kann die Montage und Demontage der Kupplung erheblich vereinfacht werden. Zur Montage kann das Fixierelement in seine erste Stellung gebracht und in die erste Aufnahme-Durchgangsausnehmung eingeführt werden. Sodann kann das Fixierelement in seine zweite Stellung verbracht werden, so dass es die Wandung des Stielabschnitts zweiseitig hintergreift und somit die Kupplung an dem Stielabschnitt fixiert. Das Fixierelement kann bevorzugt mit bloßer Hand, d.h. ohne den Einsatz von Werkzeug, von seiner ersten Stellung in seine zweite Stellung und wieder in seine erste Stellung zurück verbracht werden. Um die Kupplung von dem Innenstiel zu demontieren, kann das Fixierelement in seine erste Stellung gebracht werden, so dass das Fixierelement aus der Aufnahme-Durchgangsausnehmung entnommen werden kann.

Bei einer vorteilhaften Weiterbildung ist vorgesehen, dass die Kupplung einen Grundkörper umfasst, und dass das Fixierelement drehfest an dem Grundkörper angeordnet ist. Über den Grundkörper ist die Handhabung des Fixierelements, insbesondere das Verbringen des Fixierelements in seine erste oder zweite Stellung, besonders einfach möglich. Gleichzeitig kann der Grundkörper auch zur Abstützung der Kupplung außenseitig an dem Stielabschnitt dienen. Der Grundkörper kann in einen Schellenabschnitt zur Aufnahme des Gerüsthalters integriert oder als ein separates Bauteil der Kupplung ausgeführt sein. Drehfest bedeutet, dass ein Verdrehen des Fixierelements gegenüber dem Grundkörper zumindest um eine Achse nicht möglich ist; vorzugsweise wird ein Verdrehen des Fixierelements gegenüber dem Grundkörper um alle Achsen verhindert.

Besonders bevorzugt ist eine Weiterbildung, bei der das Fixierelement als eine Auskragung mit einem Hals und zwei sich bezüglich des Halses gegenüberliegenden und seitlich über den Hals hinausragenden Halteabschnitten ausgebildet ist. Das Fixierelement ist somit vorzugsweise im Wesentlichen T-förmig ausgebildet. Ein derart ausgebildetes Fixierelement kann in ein Langloch eingeführt werden, wenn die Auskragungen in Richtung der Längsachse des Langlochs ausgerichtet sind. Durch einfaches Verdrehen des Fixierelements, vorzugsweise durch Drehen um ca. 90°, etwa um 80° bis 100°, können die Auskragungen in Hintergriff mit der Wandung des Stielabschnitts gebracht werden, so dass die Kupplung an dem Stielabschnitt gehalten wird. Der Hals des Fixierelements weist vorzugsweise einen runden Querschnitt auf, um das Drehen des Fixierelements bei der Montage zu erleichtern; alternativ kann ein Querschnitt des Halses rechteckig ausgebildet sein. Bei einer hierzu alternativen Weiterbildung kann das Fixierelement mit einem Spreizmechanismus ausgebildet sein, wobei durch den Spreizmechanismus wenigstens zwei Halteabschnitte des Fixierelements in Hintergriff mit der Wandung des Stielabschnitts bringbar sind.

Bei einer vorteilhaften Weiterentwicklung ist vorgesehen, dass ein Sperrelement an dem Stielabschnitt angeordnet ist, und dass das Fixierelement über den Grundkörper von dem Sperrelement in der zweiten Stellung gehalten wird. Dadurch kann ein unbeabsichtigtes Übergehen des Fixierelements von der zweiten in die erste Stellung vermieden werden. Dies erhöht die Betriebssicherheit des erfindungsgemäßen Gerüsts, da die Kupplung sicher an dem Stielabschnitt fixiert wird. Vorzugsweise ist das Sperrelement in Richtung der Stiellängsachse von der jeweiligen Aufnahme-Durchgangsausnehmung beabstandet angeordnet.

Bevorzugt ist eine Fortentwicklung, bei der das Sperrelement als der Querriegel oder eine an dem Stielabschnitt angeordnete Querriegelaufnahme, insbesondere in Form einer Rosette oder eines Rosettenteils, ausgebildet ist. Es können dadurch ohnehin bereits an dem Stielabschnitt vorhandene Elemente als das Sperrelement nutzbar gemacht werden. Dadurch kann das Sperrelement ohne zusätzlichen Aufwand, insbesondere im Hinblick auf Kosten für Fertigung und Material, an dem Stielabschnitt ausgebildet werden.

Bei einer besonders vorteilhaften Fortentwicklung ist vorgesehen, dass der Grundkörper und das Sperrelement derart ausgebildet sind und das Sperrelement derart an dem Stielabschnitt angeordnet ist, dass zum Überführen des Fixierelements von der zweiten Stellung in die erste Stellung ein elastischer Widerstand zwischen dem Sperrelement und dem Grundkörper überwunden werden muss. Auf diese Weise kann sichergestellt werden, dass das Fixierelement nicht unbeabsichtigt aus der zweiten in die erste Stellung gelangt. Der elastische Widerstand ist vorteilhaft so stark ausgebildet, dass er mit Handkraft überwunden werden kann. Die Demontage der Kupplung von dem Stielabschnitt kann dann ohne Werkzeug erfolgen. Vorzugsweise muss auch zum Überführen des Sperrelements von der ersten Stellung in die zweite Stellung ein elastischer Widerstand überwunden werden. Dadurch kann bei der Montage der Kupplung an dem Stielabschnitt ein fühlbares Signal erzeugt werden, das das ordnungsgemäße Überführen des Fixierelements in die zweite Stellung bestätigt.

Bei einer vorteilhaften Fortentwicklung ist vorgesehen, dass der Grundkörper eine Längsseite und eine Querseite aufweist, dass ein erster Abstand der Querseite von dem Hals des Fixierelements größer ist als ein zweiter Abstand der Längsseite von dem Hals des Fixierelements, dass zwischen der Längsseite und der Querseite ein abgerundeter Übergang ausgebildet ist, dass in der ersten Stellung die Längsseite dem Fixierelement zugewandt ist, dass in der zweiten Stellung die Querseite dem Fixierelement zugewandt ist, und dass in der zweiten Stellung eine Entfernung der Querseite von dem Fixierelement höchstens halb so groß ist wie eine Länge der als ein erstes Langloch ausgebildeten ersten Aufnahme-Durchgangsausnehmung abzüglich einem Durchmesser des Halses des Fixierelements. Dadurch kann auf besonders einfache Weise die Sperrwirkung des Sperrelements unterstützt werden, indem es nicht möglich ist, das Fixierelement in der zweiten Stellung entlang der Längsachse des ersten Langlochs so weit zu verschieben, dass die Halsachse des Halses des Fixierelements die Mitte des ersten Langlochs erreicht. Der erste Abstand und der zweite Abstand werden orthogonal zu der Halsachse gemessen.

Besonders bevorzugt ist eine Weiterbildung, bei der das Fixierelement in der zweiten Stellung die Wandung des Stielabschnitts an zwei quer zu der Längsachse der ersten Aufnahme-Durchgangsausnehmung gegenüberliegenden Seiten der ersten Aufnahme-Durchgangsausnehmungen hintergreift, wobei die erste Aufnahme-Durchgangsausnehmung als erstes Langloch ausgebildet ist. Hierdurch kann ein Überführen des Fixierelements von der ersten Stellung in die zweite Stellung und zurück besonders einfach durch Drehen des Fixierelements erfolgen. Das Fixierelement kann dann besonders kompakt ausgebildet werden.

Vorteilhaft ist auch eine dazu alternative Weiterbildung, bei der das Fixierelement in der zweiten Stellung die Wandung des Stielabschnitts an zwei entlang der Längsachse der ersten Aufnahme-Durchgangsausnehmung gegenüberliegenden Seiten der ersten Aufnahme-Durchgangsausnehmungen hintergreift, wobei die erste Aufnahme-Durchgangsausnehmung als erstes Langloch ausgebildet ist. Das Fixierelement, insbesondere ein Querschnitt eines Halses des Fixierelements, kann dazu länglich ausgebildet werden, so dass durch das Fixierelement eine Ausrichtung der Kupplung relativ zu dem Stielabschnitt vorgegeben werden kann.

Erfindungsgemäß, ist die Kupplung an dem Innenstiel befestigt, indem das Fixierelement in die erste Aufnahme-Durchgangsausnehmung eingreift, dass das Gerüst weiterhin einen Gerüsthalter umfasst, und dass der Gerüsthalter mittels der Kupplung an dem Innenstiel befestigt ist. Der Gerüsthalter kann mit der Kupplung schnell (mit wenigen, einfachen Handgriffen) an dem Gerüst befestigt werden. Ein solches Gerüst kann gegen Umstürzen gesichert werden, indem der Gerüsthalter weiterhin an einer Fassade eines Gebäudes oder dergleichen befestigt wird. Der Gerüsthalter ist typischerweise im Wesentlichen zylinderrohrförmig ausgebildet und wird von der Kupplung umgriffen und geklemmt gehalten.

Bei einer besonders bevorzugten Weiterbildung ist vorgesehen, dass das Gerüst eine weitere Kupplung für einen Gerüsthalter umfasst. Es können dann zwei Gerüsthalter beidseitig an dem Innenstiel oder dem Außenstiel befestigt werden. Insbesondere können die zwei Gerüsthalter in der Art einer Dreiecksanker-Anbindung das Gerüst an der Fassade abstützen. Die Kupplungen können hierfür derart ausgebildet sein, dass ein Anwinkeln der Gerüsthalter gegenüber einer zu der Fassade orthogonalen Querrichtung des Gerüsts ermöglicht wird. Alternativ kann die weitere Kupplung verwendet werden, um einen Gerüsthalter sowohl an dem Innenstiel als auch an dem Außenstiel zu befestigen.

In den Rahmen der vorliegenden Erfindung fällt auch die Verwendung einer ersten Aufnahme-Durchgangsausnehmung in einem Gerüststiel eines Gerüsts zum Anbinden eines Gerüsthalters an dem Gerüststiel. Durch die erfindungsgemäße Verwendung wird das Anbinden des Gerüsthalters an dem Gerüst vereinfacht. Der Gerüststiel kann ein fassadenferner Außenstiel oder - bevorzugt - ein fassadennaher Innenstiel sein. Die erste Aufnahme-Durchgangsausnehmung bzw. das Gerüst können vorteilhaft wie oben beschrieben weitergebildet werden. Vorzugsweise werden zum Anbinden des Gerüsthalters eine Kupplung und ein Fixierelement verwendet, die wie oben beschrieben ausgebildet sind.

Weitere Vorteile der Erfindung ergeben sich aus der nachfolgenden Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Der Schutzbereich ist durch die beigefügten Ansprüche definiert.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Ansicht eines erfindungsgemäßen Gerüsts;
- Fig. 2: eine schematische Ansicht eines Innenstiels einer zweiten Ausführungsform eines erfindungsgemäßen Gerüsts mit einer ersten Aufnahme-Durchgangsausnehmung und einer fünften Aufnahme-Durchgangsausnehmung;
- Fig. 3: einen schematischen Längsschnitt durch den Innenstiel eines erfindungsgemäßen Gerüsts mit einer in der ersten Aufnahme-Durchgangsausnehmung gehaltenen Kupplung und einen Gerüsthalter;
- Fig. 4: eine schematische Seitenansicht des Innenstiels von Fig. 3 mit Blick auf den Grundkörper der Kupplung;
- Fig. 5: einen schematischen Querschnitt durch den Innenstiel von Fig. 3 mit eingehaktem Fixierelement und Grundkörper der Kupplung;
- Fig. 6: eine schematische, teilgebrochene Rückansicht eines Innenstiels einer weiteren Ausführungsform eines erfindungsgemäßen Gerüsts mit einer ersten Aufnahme-Durchgangsausnehmung und einer zweiten Aufnahme-Durchgangsausnehmung;
- Fig. 7: eine schematische Seitenansicht des Innenstiels von Fig. 6;
- Fig. 8: einen schematischen Längsschnitt durch einen Außenstiel einer weiteren Ausführungsform eines erfindungsgemäßen Gerüsts mit einer dritten Aufnahme-Durchgangsausnehmung und einer vierten Aufnahme-Durchgangsausnehmung sowie einer weiteren Kupplung.

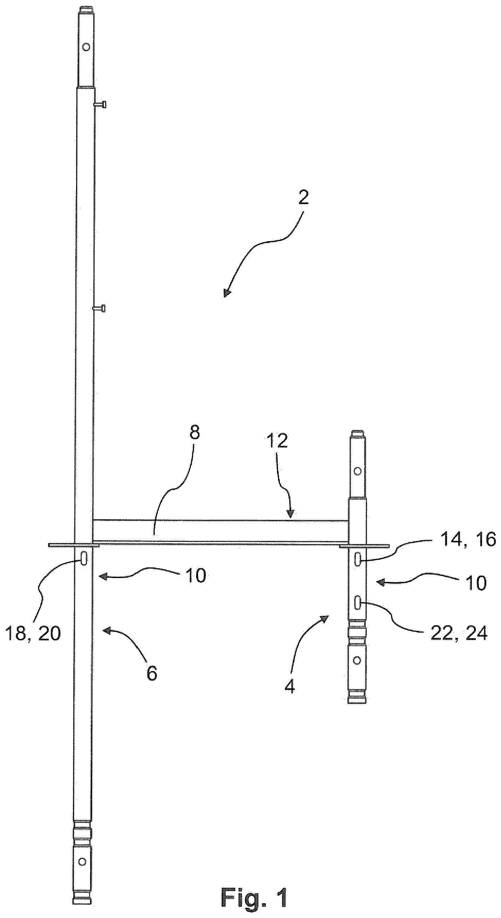

**Figur 1** zeigt schematisch ein Gerüst 2, das hier als ein Fassadengerüst ausgebildet ist, mit einem Innenstiel 4, einem Außenstiel 6 und einem Querriegel 8 zwischen dem Innenstiel 4 und dem Außenstiel 6. Der Innenstiel 4 und der Außenstiel 6 sind hier als unlösbar mit dem Querriegel 8 zu einer Einheit verbundene Stielsegmente ausgeführt. An dem Querriegel 8 kann ein Gerüstbelag (nicht dargestellt) befestigt werden.

Der Innenstiel 6 weist in einem hohlzylindrischen Stielabschnitt 10 unterhalb einer Oberseite 12 des Querriegels 8 eine erste Aufnahme-Durchgangsausnehmung 14 auf, die hier als ein erstes Langloch 16 ausgebildet ist. Die erste Aufnahme-Durchgangsausnehmung 14 dient zur Befestigung einer Kupplung (nicht dargestellt) für einen Gerüsthalter (nicht dargestellt) an dem Innenstiel 4. Die Oberseite 12 des Querriegels 8 bezieht sich dabei auf den montierten (aufgestellten) Zustand des Gerüsts 2.

In dem Außenstiel 6 ist in einem hohlzylindrischen Stielabschnitt 10 eine dritte Aufnahme-Durchgangsausnehmung 18 ausgebildet. Die dritte Aufnahme-Durchgangsausnehmung 18 ist hier als ein drittes Langloch 20 ausgeführt und auf gleicher Höhe (gleich weit von der Oberseite 12 des Querriegels 8 beabstandet) wie die erste Aufnahme-Durchgangsausnehmung 14 ausgebildet. Es wird dadurch ermöglicht, einen Gerüsthalter (nicht dargestellt) sowohl an dem Innenstiel 4 als auch an dem Außenstiel 6 mittels jeweils einer Kupplung (nicht dargestellt) zu befestigen.

Von der ersten Aufnahme-Durchgangsausnehmung 14 beabstandet ist hier in dem hohlzylindrischen Stielabschnitt 10 des Innenstiels 4 eine fünfte Aufnahme-Durchgangsausnehmung 22 angeordnet, die als ein fünftes Langloch 24 ausgeführt ist. Die fünfte Aufnahme-Durchgangsausnehmung 22 eröffnet eine weitere Befestigungsmöglichkeit für einen Gerüsthalter (nicht dargestellt).

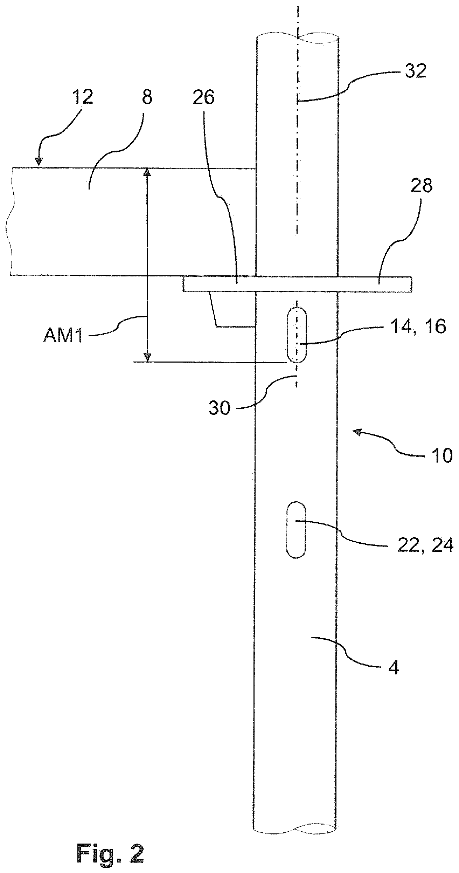

**Figur 2** zeigt eine schematische Ansicht eines Innenstiels 4 einer zweiten Ausführungsform eines erfindungsgemäßen Gerüsts mit einer ersten Aufnahme-Durchgangsausnehmung 14 und einer fünften Aufnahme-Durchgangsausnehmung 22. Ein Querriegel 8 ist hier mittels einer Querriegelaufnahme 26 in Form einer ringförmig umlaufenden Rosette 28 an dem Innenstiel 4 befestigt.

Die erste Aufnahme-Durchgangsausnehmung 14 ist hier unmittelbar unterhalb der Rosette 28 angeordnet und als ein erstes Langloch 16 ausgebildet. Ein maximaler Abstand AM1 der ersten Aufnahme-Durchgangsausnehmung 14 von einer Oberseite 12 des Querriegels 8 beträgt hier weniger als 110 mm. Die Längsachse 30 des ersten Langlochs 16 ist dabei parallel zu der Stiellängsachse 32 des hohlzylindrischen Stielabschnitts 10 ausgerichtet.

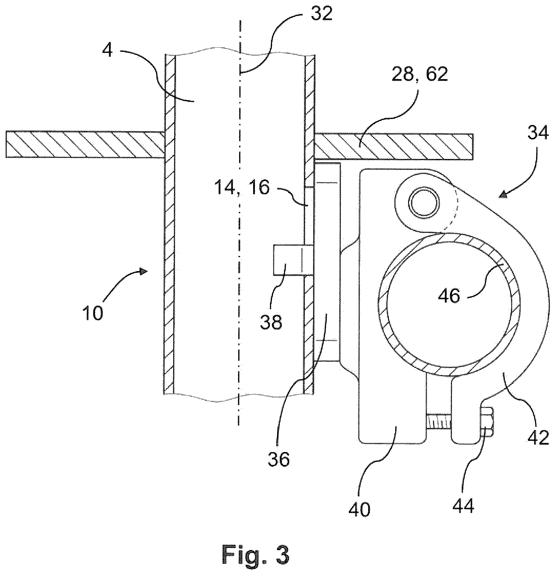

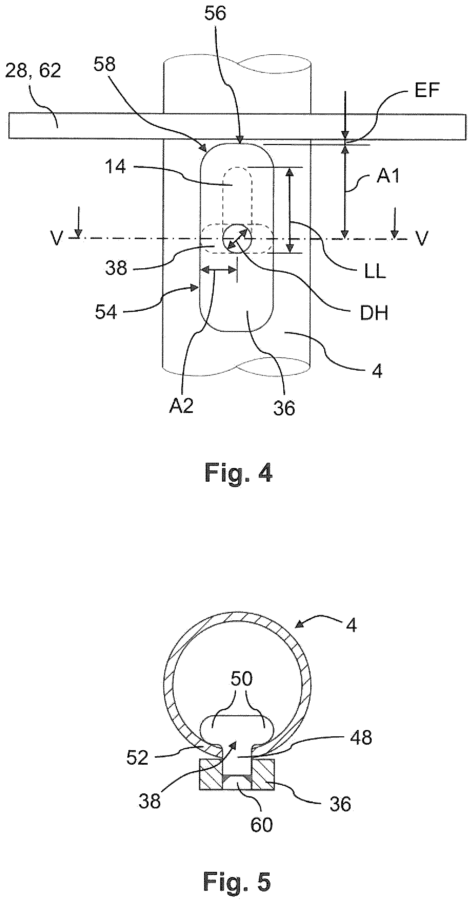

Die **Figuren 3****,** **4** und **5** zeigen schematisch einen Ausschnitt eines erfindungsgemäßen Gerüsts. Die **Figur 3** zeigt einen schematischen Längsschnitt durch einen Innenstiel 4 des Gerüsts sowie eine an dem Innenstiel 4 befestigte Kupplung 34. Die **Figur 4** zeigt eine schematische Seitenansicht des Innenstiels 4 mit Blick auf einen Grundkörper 36 der Kupplung 34 (siehe Figur 3). In der **Figur 5** ist ein schematischer Querschnitt durch den Innenstiel 4 und den Grundkörper 36 der Kupplung 34 (siehe Figur 3) entlang der Ebene V-V aus der Fig. 4 dargestellt. Das erfindungsgemäße Gerüst wird nachfolgend in einer Zusammenschau der Figuren 3, 4 und 5 erläutert.

Die Kupplung 34 umfasst den Grundkörper 36 mit einem Fixierelement 38, einen Schellenabschnitt 40, einen Klemmbügel 42 und eine Klemmschraube 44. In den Figuren 4 und 5 ist der Übersichtlichkeit halber jeweils lediglich der Grundkörper 36 mit dem Fixierelement 38 dargestellt. Ein Gerüsthalter 46 wird von dem Schellenabschnitt 40 und dem Klemmbügel 42 umgriffen. Durch Anziehen der Klemmschraube 44 ist der Gerüsthalter 46 an der Kupplung 34 fixiert.

Die Kupplung 34 ist in der ersten Aufnahme-Durchgangsausnehmung 14 gehalten. Das Fixierelement 38 ist hier als eine T-förmige Auskragung mit einem Hals 48 und zwei sich bezüglich des Halses 48 gegenüberliegenden und seitlich über den Hals 48 hinausragenden Halteabschnitten 50 ausgebildet. Die beiden Halteabschnitte 50 hintergreifen eine Wandung 52 eines hohlzylindrischen Stielabschnitts 10 an zwei quer zu der Stiellängsachse 32 gegenüberliegenden Seiten der ersten Aufnahme-Durchgangsausnehmung 14.

Das Befestigen und Lösen der Kupplung 34 erfolgt hier in der Art eines Bajonett-Verschlusses durch Drehen der Kupplung 34, hier durch Drehen um 90°. Die erste Aufnahme-Durchgangsausnehmung 14 ist dazu als ein erstes Langloch 16 ausgebildet. Eine Länge LL des ersten Langlochs 16 ist hierbei so groß gewählt, dass das Fixierelement 38 in einer gegenüber der dargestellten zweiten Stellung um 90° verdrehten ersten Stellung in die erste Aufnahme-Durchgangsausnehmung 14 eingeführt bzw. aus der ersten Aufnahme-Durchgangsausnehmung 14 entnommen werden kann.

Der Grundkörper 36 der Kupplung 34 ist hier als eine Platte mit einer Längsseite 54, einer Querseite 56 und einem abgerundeten Übergang 58 zwischen der Längsseite 54 und der Querseite 56 ausgebildet. Dabei ist ein erster Abstand A1 der Querseite 56 von dem Hals 48 größer als ein zweiter Abstand A2 der Längsseite 54 von dem Hals 48. Das Fixierelement 38 ist drehfest an dem Grundkörper 36 befestigt; hier ist der Hals 48 des Fixierelements 38 in einer zentralen Bohrung 60 des Grundkörpers 36 verschweißt.

Die erste Aufnahme-Durchgangsausnehmung 14 ist hier unmittelbar unterhalb einer Rosette 28 an dem Innenstiel 4 des Gerüsts angeordnet. Die Rosette 28 kann zum Befestigen eines Querriegels (nicht dargestellt) oder anderer Bauteile des Gerüsts an dem Innenstiel 4 dienen. Die Rosette 28 wirkt hier ferner als ein Sperrelement 62. Eine Entfernung EF zwischen dem Sperrelement 62 und der Querseite 56, die in der zweiten Stellung des Fixierelements 38 dem Sperrelement 62 zugewandt ist, ist hier so gewählt, dass beim Drehen der Kupplung 34 von der zweiten Stellung in die erste Stellung und umgekehrt der abgerundete Übergang 58 unter Überwindung eines elastischen Widerstandes an dem Sperrelement 62 vorbeigeführt werden muss. Insbesondere ist hier die Entfernung EF weniger als halb so groß wie die Länge LL des ersten Langlochs 16 abzüglich einem Durchmesser DH des Halses 48 des Fixierelements 38.

In der gegenüber der gezeigten zweiten Stellung um 90° gedrehten ersten Stellung der Kupplung 34 und des Fixierelements 38 kann die Kupplung 34 so weit nach oben geschoben werden, dass das Fixierelement 38 aus dem Innenstiel 4 entnommen werden kann. Der zweite Abstand A2 der Längsseite 54 des Grundkörpers 36 von dem Hals 48 des Fixierelements ist dazu entsprechend kleiner gewählt als der erste Abstand A1 der Querseite 56 von dem Hals 48.

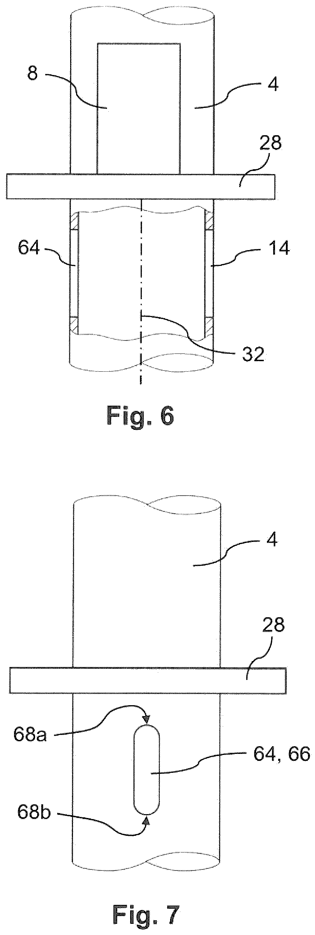

**Figur 6** zeigt eine schematische, teilgebrochene Rückansicht eines Innenstiels 4 einer vierten Ausführungsform eines erfindungsgemäßen Gerüsts. In dem Innenstiel 4 sind eine erste Aufnahme-Durchgangsausnehmung 14 und einer zweite Aufnahme-Durchgangsausnehmung 64 ausgebildet. Die zweite Aufnahme-Durchgangsausnehmung 64 ist der ersten Aufnahme-Durchgangsausnehmung 14 diametral gegenüberliegend auf gleicher Höhe entlang der Stiellängsachse 32 angeordnet. Weiterhin ist die zweite Aufnahme-Durchgangsausnehmung 64 in der gleichen Form und Größe wie die erste Aufnahme-Durchgangsausnehmung 14 ausgebildet, so dass dieselbe Kupplung (nicht dargestellt) wahlweise an der ersten Aufnahme-Durchgangsausnehmung 14 oder der zweiten Aufnahme-Durchgangsausnehmung 64 befestigt werden kann. Oberhalb der ersten Aufnahme-Durchgangsausnehmung 14 und der zweiten Aufnahme-Durchgangsausnehmung 64 ist eine Rosette 28 an dem Innenstiel 4 angeordnet, wobei ein Querriegel 8 an der Rosette 28 befestigbar ist.

In **Figur 7** ist eine schematische Seitenansicht des Innenstiels 4 von Figur 6 dargestellt. Die zweite Aufnahme-Durchgangsausnehmung 64 ist hier als ein zweites Langloch 66 mit abgerundeten Schmalseiten 68a, 68b ausgebildet. Eine erste Schmalseite 68a weist dabei direkt zur Rosette 28 hin, eine zweite Schmalseite 68b weist direkt von der Rosette 28 weg.

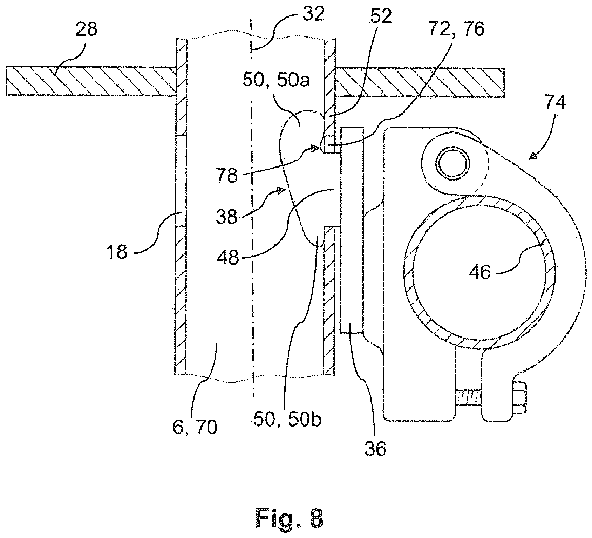

**Figur 8** zeigt einen schematischen Längsschnitt durch einen Gerüststiel 70 einer weiteren Ausführungsform eines erfindungsgemäßen Gerüsts. Der Gerüststiel 70 ist hier als ein Außenstiel 6 ausgebildet. In dem Außenstiel 6 sind eine dritte Aufnahme-Durchgangsausnehmung 18 und eine vierte Aufnahme-Durchgangsausnehmung 72 ausgebildet. Ein Gerüsthalter 46 wird sowohl am Innenstiel (nicht dargestellt) von einer Kupplung (nicht dargestellt) als auch am Außenstiel 6 von einer weiteren Kupplung 74 umgriffen und geklemmt gehalten. Die weitere Kupplung 74 ist in der vierten Aufnahme-Durchgangsausnehmung 72 befestigt. Die vierte Aufnahme-Durchgangsausnehmung 72 ist hier als ein viertes Langloch 76 ausgebildet.

Ein Fixierelement 38 der weiteren Kupplung 74 ist als eine ohrenförmige Auskragung über einen Grundkörper 36 der weiteren Kupplung 74 hinaus ausgebildet. Zwei Halteabschnitte 50, nämlich ein oberer Halteabschnitt 50a und ein unterer Halteabschnitt 50b, die über einen Hals 48 des Fixierelements 38 hinausragen, hintergreifen in der dargestellten zweiten Stellung eine Wandung 52 des Außenstiels 6 an zwei entlang der Stiellängsachse 32 gegenüberliegenden Seiten.

In der ersten Stellung zur Montage bzw. Demontage der weiteren Kupplung 74 an bzw. von dem Außenstiel 6 ist die weitere Kupplung 74 in der vierten Aufnahme-Durchgangsausnehmung 72 nach oben geschoben, so dass der Hals 48 oberseitig an dem vierten Langloch 76 anliegt, und unterseitig von dem Außenstiel 6 radial weg verschwenkt. Um das Verschwenken zu ermöglichen, ist an dem oberen Halteabschnitt 50a eine Einbuchtung 78 ausgebildet. Es findet also kein Verdrehen wie bei der in der Figur 3 gezeigten Kupplung 34 statt.

Der untere Halteabschnitt 50b ragt hier so weit über den Hals 48 hinaus, dass zum Einhaken des Fixierelements 36 in den Außenstiel 6 bzw. zum Aushaken des Fixierelements 36 aus dem Außenstiel 6 der untere Halteabschnitt 50b einen elastischen Widerstand zwischen dem unteren Halteabschnitt 50b und einer unteren Schmalseite des vierten Langlochs 76 überwinden muss. Zusätzlich kann zwischen einer Rosette 28, die oberhalb der vierten Aufnahme-Durchgangsausnehmung 72 angeordnet ist, und dem Grundkörper 36 ein Sperrelement (nicht dargestellt) angeordnet werden, so dass das Fixierelement 38 in der zweiten Stellung gehalten wird. Das Sperrelement kann beispielsweise den Gerüststiel 70 unterhalb der Rosette 28 umgreifen oder an der Rosette 28 befestigt werden.

Unter Vornahme einer Zusammenschau aller Figuren der Zeichnung betrifft die Erfindung zusammenfassend ein Gerüst 2 mit einem Innenstiel 4 und einem Außenstiel 6. Zumindest der Innenstiel 4 weist eine erste Aufnahme-Durchgangsausnehmung 14 auf. Die erste Aufnahme-Durchgangsausnehmung 14 dient der Verbindung des Gerüsts 2 mit einer Kupplung 34 zur Verankerung des Gerüsts 2 an einer Fassade. Innenstiel 4 und Außenstiel 6 sind über einen Querriegel 8 des Gerüsts 2 verbunden. Die erste Aufnahme-Durchgangsausnehmung 14 kann oberhalb oder unterhalb der Oberseite 12 des Querriegels 8 am Innenstiel 4 ausgebildet sein. Die Begriffe "unterhalb" und "oberhalb" beziehen sich dabei im Rahmen der vorliegenden Erfindung auf den aufgestellten Zustand des Gerüsts 2. Wenn die erste Aufnahme-Durchgangsausnehmung 14 oberhalb der Oberseite 12 des Querriegels 8 ausgebildet ist, ist sie in Form einer nicht kreisförmigen Durchgangsausnehmung, insbesondere in Form eines ersten Langlochs 16, ausgebildet. Die erste Aufnahme-Durchgangsausnehmung 14 ist weniger als 300 mm, insbesondere weniger als 250 mm, besonders bevorzugt weniger als 200 mm von der Oberseite 12 des Querriegels 8 beabstandet. Weiter bevorzugt durchdringt die erste Aufnahme-Durchgangsausnehmung 14 den Innenstiel 4 vollständig, sodass der Innenstiel 4 eine zweite Aufnahme-Durchgangsausnehmung 64 aufweist, die der ersten Aufnahme-Durchgangsausnehmung 14 gegenüberliegt. In besonders bevorzugter Ausgestaltung der Erfindung weist der Außenstiel 6 auf gleicher vertikaler Höhe wie die erste Aufnahme-Durchgangsausnehmung 14 eine dritte Aufnahme-Durchgangsausnehmung 18 auf, um das Gerüst 2 mit einem zweistieligen Gerüsthalter, der sowohl mit der ersten Aufnahme-Durchgangsausnehmung 14 als auch mit der dritten Aufnahme-Durchgangsausnehmung 18 verbindbar ist, an der Fassade zu verankern. Die dritte Aufnahme-Durchgangsausnehmung 18 kann den Außenstiel 6 vollständig durchdringen, sodass der Außenstiel 6 eine vierte Aufnahme-Durchgangsausnehmung 72 aufweist, die der dritten Aufnahme-Durchgangsausnehmung 18 gegenüberliegt.

## Patentansprüche

1. Gerüst (2) in Form eines Fassadengerüsts, umfassend
• einen Innenstiel (4),
• einen Außenstiel (6) und
• einen Querriegel (8) zwischen dem Innenstiel (4) und dem Außenstiel (6),
wobei der Innenstiel (4) in einem hohlen Stielabschnitt (10) eine erste Aufnahme-Durchgangsausnehmung (14) für eine Kupplung (34) zum Anbinden eines Gerüsthalters (46) aufweist, wobei ein maximaler Abstand (AM1) der ersten Aufnahme-Durchgangsausnehmung (14) von einer Oberseite (12) des Querriegels (8) höchstens 300 mm beträgt, wobei die erste Aufnahme-Durchgangsausnehmung (14)
a) unterhalb der Oberseite (12) des Querriegels (8) angeordnet ist, oder
b) oberhalb der Oberseite (12) des Querriegels (8) als ein erstes Langloch (16) ausgebildet ist,
und wobei das Gerüst (2) weiterhin einen Gerüsthalter (46) umfasst,
wobei das Gerüst (2) eine Kupplung (34) zum Anbinden des Gerüsthalters (46) und ein Fixierelement (38) zum Befestigen der Kupplung (34) an dem Stielabschnitt (10) umfasst, wobei die Kupplung (34) an dem Innenstiel (4) befestigt ist, indem das Fixierelement (38) in die erste Aufnahme-Durchgangsausnehmung (14) eingreift,
und wobei der Gerüsthalter (46) mittels der Kupplung (34) an dem Innenstiel (4) befestigt ist, **dadurch gekennzeichnet, dass** das Fixierelement (38) unverlierbar an der Kupplung gehalten ist und dass der Gerüsthalter (46) von der Kupplung (34) umgriffen und geklemmt gehalten wird.

2. Gerüst nach Anspruch 1, **dadurch gekennzeichnet, dass** gegenüber der ersten Aufnahme-Durchgangsausnehmung (14) eine zweite Aufnahme-Durchgangsausnehmung (64) in dem hohlen, insbesondere hohlzylindrischen, Stielabschnitt (10) des Innenstiels (4)
a) unterhalb der Oberseite (12) des Querriegels (8) angeordnet ist, oder
b) oberhalb der Oberseite (12) des Querriegels (8) als ein zweites Langloch (66) ausgebildet ist, insbesondere wobei die Längsachse des zweiten Langlochs (66) parallel zur Stiellängsachse (32) des hohlzylindrischen Stielabschnitts (10) ausgerichtet ist.

3. Gerüst nach einem der vorhergehenden Ansprüche, **dadurch gekennzeichnet, dass** der Außenstiel (6) in einem hohlzylindrischen Stielabschnitt (10) eine dritte Aufnahme-Durchgangsausnehmung (18) für die Kupplung (34) aufweist, und dass ein maximaler Abstand der dritten Aufnahme-Durchgangsausnehmung (18) von einer Oberseite (12) des Querriegels (8) höchstens 190 mm beträgt.

4. Gerüst nach Anspruch 3, **dadurch gekennzeichnet, dass** gegenüber der dritten Aufnahme-Durchgangsausnehmung (18) eine vierte Aufnahme-Durchgangsausnehmung (72) in dem hohlzylindrischen Stielabschnitt (10) des Außenstiels (6) ausgebildet ist.

5. Gerüst nach einem der vorhergehenden Ansprüche, **dadurch gekennzeichnet, dass** das Fixierelement (38) in seiner ersten Stellung in die erste Aufnahme-Durchgangsausnehmung (14) einführbar ist, und dass das Fixierelement (38) in seiner zweiten Stellung eine Wandung (52) des Stielabschnitts (10) an zwei gegenüberliegenden Seiten der ersten Aufnahme-Durchgangsausnehmung (14) hintergreift.

6. Gerüst nach einem der vorhergehenden Ansprüche, **dadurch gekennzeichnet, dass** die Kupplung (34) einen Grundkörper (36) umfasst, und dass das Fixierelement (38) drehfest an dem Grundkörper (36) angeordnet ist.

7. Gerüst nach einem der vorhergehenden Ansprüche, **dadurch gekennzeichnet, dass** das Fixierelement (38) als eine Auskragung mit einem Hals (48) und zwei sich bezüglich des Halses (48) gegenüberliegenden und seitlich über den Hals (48) hinausragenden Halteabschnitten (50; 50a, 50b) ausgebildet ist.

8. Gerüst nach einem der Ansprüche 6 oder 7, **dadurch gekennzeichnet, dass** ein Sperrelement (62) an dem Stielabschnitt (10) angeordnet ist, und dass das Fixierelement (38) über den Grundkörper (36) von dem Sperrelement (62) in der zweiten Stellung gehalten wird.

9. Gerüst nach Anspruch 8, **dadurch gekennzeichnet, dass** das Sperrelement (62) als der Querriegel (8) oder eine an dem Stielabschnitt (10) angeordnete Querriegelaufnahme (26), insbesondere in Form einer Rosette (28) oder eines Rosettenteils, ausgebildet ist.

10. Gerüst nach Anspruch 8 oder 9, **dadurch gekennzeichnet, dass** der Grundkörper (36) und das Sperrelement (62) derart ausgebildet sind und das Sperrelement (62) derart an dem Stielabschnitt (10) angeordnet ist, dass zum Überführen des Fixierelements (38) von der zweiten Stellung in die erste Stellung ein elastischer Widerstand zwischen dem Sperrelement (62) und dem Grundkörper (36) überwunden werden muss.

11. Gerüst nach einem der Ansprüche 8 bis 10, **dadurch gekennzeichnet,**
**dass** der Grundkörper (36) eine Längsseite (54) und eine Querseite (56) aufweist,
**dass** ein erster Abstand (A1) der Querseite (56) von dem Hals (48) des Fixierelements (38) größer ist als ein zweiter Abstand (A2) der Längsseite (54) von dem Hals (48) des Fixierelements (38),
**dass** zwischen der Längsseite (54) und der Querseite (56) ein abgerundeter Übergang (58) ausgebildet ist,
**dass** in der ersten Stellung die Längsseite (54) dem Sperrelement (62) zugewandt ist,
**dass** in der zweiten Stellung die Querseite (56) dem Sperrelement (62) zugewandt ist, und
**dass** in der zweiten Stellung eine Entfernung (EF) der Querseite (56) von dem Sperrelement (62) höchstens halb so groß ist wie eine Länge (LL) der als ein erstes Langloch (16) ausgebildeten ersten Aufnahme-Durchgangsausnehmung (14) abzüglich einem Durchmesser (DH) des Halses (48) des Fixierelements (38).

12. Gerüst nach einem der Ansprüche 1 bis 11, **dadurch gekennzeichnet, dass** das Fixierelement (38) in der zweiten Stellung die Wandung (52) des Stielabschnitts (10) an zwei quer zu der Längsachse (30) der als erstes Langloch (16) ausgebildeten ersten Aufnahme-Durchgangsausnehmung (14) gegenüberliegenden Seiten der ersten Aufnahme-Durchgangsausnehmung (14) hintergreift.

13. Gerüst nach einem der Ansprüche 1 bis 11, **dadurch gekennzeichnet, dass** das Fixierelement (38) in der zweiten Stellung die Wandung (52) des Stielabschnitts (10) an zwei entlang der Längsachse (30) der als erstes Langloch (16) ausgebildeten ersten Aufnahme-Durchgangsausnehmung (14) gegenüberliegenden Seiten der ersten Aufnahme-Durchgangsausnehmung (14) hintergreift.

14. Gerüst nach einem der vorhergehenden Ansprüche, **dadurch gekennzeichnet, dass** das Gerüst (2) eine weitere Kupplung (74) für einen Gerüsthalter (46) umfasst.

15. Verwendung einer ersten Aufnahme-Durchgangsausnehmung (14) in einem Gerüststiel (70) eines Gerüsts nach einem der vorhergehenden Ansprüche zum Anbinden eines Gerüsthalters (46) an dem Gerüststiel (70).

## Claims

1. Scaffold (2) in the form of a facade scaffold, comprising
• an inner pole (4),
• an outer pole (6), and
• a cross brace (8) between the inner pole (4) and the outer pole (6),
the inner pole (4) comprising, in a hollow pole portion (10), a first receiving through-opening (14) for a coupling (34) for attaching a scaffold holder (46), a maximum distance (AM1) between the first receiving through-opening (14) and an upper side (12) of the cross brace (8) being no more than 300 mm, the first receiving through-opening (14) being
a) arranged below the upper side (12) of the cross brace (8), or
b) designed as a first elongate hole (16) above the upper side (12) of the cross brace (8),
the scaffold (2) further comprising a scaffold holder (46), the scaffold (2) comprising a coupling (34) for attaching the scaffold holder (46) and a fixing element (38) for fastening the coupling (34) to the pole portion (10), the coupling (34) being fastened to the inner pole (4) by the fixing element (38) engaging in the first receiving through-opening (14), and the scaffold holder (46) being fastened to the inner pole (4) by means of the coupling (34), **characterized in that** the fixing element (38) is held captively on the coupling, and **in that** the scaffold holder (46) is surrounded and held in a clamped manner by the coupling (34).

2. Scaffold according to claim 1, **characterized in that**, in the hollow, in particular hollow cylindrical, pole portion (10) of the inner pole (4) and opposite the first receiving through-opening (14), a second receiving through-opening (64) is
a) arranged below the upper side (12) of the cross brace (8), or
b) designed as a second elongate hole (66) above the upper side (12) of the cross brace (8), the longitudinal axis of the second elongate hole (66) being in particular aligned in parallel with a pole longitudinal axis (32) of the hollow cylindrical pole portion (10).

3. Scaffold according to either of the preceding claims, **characterized in that** the outer pole (6) comprises, in a hollow cylindrical pole portion (10), a third receiving through-opening (18) for the coupling (34), and **in that** a maximum distance between the third receiving through-opening (18) and an upper side (12) of the cross brace (8) is no more than 190 mm.

4. Scaffold according to claim 3, **characterized in that** a fourth receiving through-opening (72) is provided opposite the third receiving through-opening (18) in the hollow cylindrical pole portion (10) of the outer pole (6).

5. Scaffold according to any of the preceding claims, **characterized in that** the fixing element (38), in its first position, can be inserted into the first receiving through-opening (14), and **in that** the fixing element (38), in its second position, engages behind a wall (52) of the pole portion (10) on two opposite sides of the first receiving through-opening (14).

6. Scaffold according to any of the preceding claims, **characterized in that** the coupling (34) comprises a main body (36), and **in that** the fixing element (38) is arranged non-rotatably on the main body (36).

7. Scaffold according to any of the preceding claims, **characterized in that** the fixing element (38) is designed as a projection having a neck (48) and two holding portions (50; 50a, 50b) which are opposite one another with respect to the neck (48) and project laterally beyond the neck (48).

8. Scaffold according to either claim 6 or claim 7, **characterized in that** a blocking element (62) is arranged on the pole portion (10), and **in that** the fixing element (38) is held in the second position by the blocking element (62) via the main body (36).

9. Scaffold according to claim 8, **characterized in that** the blocking element (62) is designed as the cross brace (8) or as a cross brace receptacle (26) which is arranged on the pole portion (10), in particular in the form of a rosette (28) or a rosette part.

10. Scaffold according to either claim 8 or claim 9, **characterized in that** the main body (36) and the blocking element (62) are designed in such a way, and the blocking element (62) is arranged on the pole portion (10) in such a way, that a resilient resistance between the blocking element (62) and the main body (36) has to be overcome in order to move the fixing element (38) from the second position to the first position.

11. Scaffold according to any of claims 8 to 10, **characterized in that** the main body (36) has a longitudinal side (54) and a transverse side (56),
**in that** a first distance (A1) between the transverse side (56) and the neck (48) of the fixing element (38) is greater than a second distance (A2) between the longitudinal side (54) and the neck (48) of the fixing element (38),
**in that** a rounded transition (58) is provided between the longitudinal side (54) and the transverse side (56),
**in that** the longitudinal side (54) faces the blocking element (62) in the first position,
**in that** the transverse side (56) faces the blocking element (62) in the second position, and **in that**, in the second position, a spacing (EF) between the transverse side (56) and the blocking element (62) is no more than half the size of a length (LL) of the first receiving through-opening (14) which is designed as a first elongate hole (16) minus a diameter (DH) of the neck (48) of the fixing element (38).

12. Scaffold according to any of claims 1 to 11, **characterized in that**, in the second position, the fixing element (38) engages behind the wall (52) of the pole portion (10) on two opposite sides of the first receiving through-opening (14) that are transverse to the longitudinal axis (30) of the first receiving through-opening (14) which is designed as the first elongate hole (16).

13. Scaffold according to any of claims 1 to 11, **characterized in that**, in the second position, the fixing element (38) engages behind the wall (52) of the pole portion (10) on two opposite sides of the first receiving through-opening (14) that are provided along the longitudinal axis (30) of the first receiving through-opening (14) which is designed as the first elongate hole (16).

14. Scaffold according to any of the preceding claims, **characterized in that** the scaffold (2) comprises another coupling (74) for a scaffold holder (46).

15. Use of a first receiving through-opening (14) in a scaffold pole (70) of a scaffold according to any of the preceding claims for attaching a scaffold holder (46) to the scaffold pole (70).

## Revendications

1. Échafaudage (2) sous forme d'échafaudage de façade, comprenant :
• un montant interne (4),
• un montant externe (6) et
• une barre transversale (8) entre le montant interne (4) et le montant externe (6),
le montant interne (4) présentant, dans une partie de montant creuse (10), un premier évidement traversant de réception (14) pour un raccord (34) permettant de relier un support d'échafaudage (46), une distance maximale (AM1) entre le premier évidement traversant de réception (14) et une face supérieure (12) de la barre transversale (8) n'excédant pas 300 mm, le premier évidement traversant de réception (14)
a) étant agencé en-dessous de la face supérieure (12) de la barre transversale (8), ou
b) étant formé au-dessus de la face supérieure (12) de la barre transversale (8) en tant que premier orifice longitudinal (16),
et l'échafaudage (2) comprenant en outre un support d'échafaudage (46), l'échafaudage (2) comprenant un raccord (34) permettant de relier le support d'échafaudage (46) et un élément de fixation (38) permettant de fixer le raccord (34) à la partie de montant (10), le raccord (34) étant fixé au montant interne (4) par venue en prise de l'élément de fixation (38) avec le premier évidement traversant de réception (14),et le support d'échafaudage (46) étant fixé au montant interne (4) au moyen du raccord (34), **caractérisé en ce que** l'élément de fixation (38) est maintenu de manière imperdable au niveau du raccord et que le support d'échafaudage (46) est maintenu saisi et serré par le raccord (34).

2. Échafaudage selon la revendication 1, **caractérisé en ce qu'**un deuxième évidement traversant de réception (64) est agencé en face du premier évidement traversant de réception (14) dans la partie de montant creuse (10), en particulier à évidement cylindrique, du montant interne (4)
a) en-dessous de la face supérieure (12) de la barre transversale (8), ou
b) est formé au-dessus de la face supérieure (12) de la barre transversale (8) en tant que second orifice longitudinal (66), l'axe longitudinal du second orifice longitudinal (66) étant en particulier orienté parallèlement à l'axe longitudinal de montant (32) de la partie de montant à évidement cylindrique (10).

3. Échafaudage selon l'une des revendications précédentes, **caractérisé en ce que** le montant externe (6) présente, dans une partie de montant à évidement cylindrique (10), un troisième évidement traversant de réception (18) pour le raccord (34) et **en ce qu'**une distance maximale entre le troisième évidement traversant de réception (18) et une face supérieure (12) de la barre transversale (8) n'excède pas 190 mm.

4. Échafaudage selon la revendication 3, **caractérisé en ce qu'**un quatrième évidement traversant de réception (72) est formé en face du troisième évidement traversant de réception (18) dans la partie de montant à évidement cylindrique (10) du montant externe (6).

5. Échafaudage selon l'une des revendications précédentes, **caractérisé en ce que**, dans sa première position, l'élément de fixation (38) peut être inséré dans le premier évidement traversant de réception (14), et que, dans sa seconde position, l'élément de fixation (38) vient en prise, par l'arrière, avec une paroi (52) de la partie de montant (10) sur deux côtés opposés du premier évidement traversant de réception (14).

6. Échafaudage selon l'une des revendications précédentes, **caractérisé en ce que** le raccord (34) comprend un corps de base (36) et **en ce que** l'élément de fixation (38) est agencé de manière non rotative sur le corps de base (36).

7. Échafaudage selon l'une des revendications précédentes, **caractérisé en ce que** l'élément de fixation (38) est formé en tant que saillie avec un col (48) et deux parties de support (50 ; 50a ; 50b) se faisant face l'une à l'autre par rapport au col (48) et dépassant latéralement au-delà du col (48).

8. Échafaudage selon l'une des revendications 6 ou 7, **caractérisé en ce qu'**un élément de verrouillage (62) est agencé sur la partie de montant (10) et que l'élément de fixation (38) est maintenu au-dessus du corps de base (36) par l'élément de verrouillage (62) dans la deuxième position.

9. Échafaudage selon la revendication 8, **caractérisé en ce que** l'élément de verrouillage (62) est formé en tant que barre transversale (8) ou en tant que logement de barre transversale (26) agencé sur la partie de montant (10), en particulier sous forme de rosace (28) ou de partie de rosace.

10. Échafaudage selon la revendication 8 ou 9, **caractérisé en ce que** le corps de base (36) et l'élément de verrouillage (62) sont formés de sorte que, et que l'élément de verrouillage (62) est agencé sur la partie de montant (10) de sorte que, pour passer l'élément de fixation (38) de la seconde position à la première position, il faut surmonter une résistance élastique entre l'élément de verrouillage (62) et le corps de base (36).

11. Échafaudage selon l'une des revendications 8 à 10, **caractérisé en ce que** le corps de base (36) présente une face longitudinale (54) et une face transversale (56),
**en ce qu'**une première distance (A1) entre la face transversale (56) et le col (48) de l'élément de fixation (38) est supérieure à une seconde distance (A2) entre la face longitudinale (54) et le col (48) de l'élément de fixation (38),
**en ce qu'**une transition arrondie (58) est formée entre la face longitudinale (54) et la face transversale (56),
**en ce que**, dans la première position, la face longitudinale (54) est orientée vers l'élément de verrouillage (62),
**en ce que** dans la seconde position, la face transversale (56) est orientée vers l'élément de verrouillage (62), et
**en ce que**, dans la seconde position, un écartement (EF) de la face transversale (56) par rapport à l'élément de verrouillage (62) n'excède pas la moitié d'une longueur (LL) du premier évidement traversant de réception (14) formé en tant que premier orifice longitudinal (16), déduction faite d'un diamètre (DH) du col (48) de l'élément de fixation (38).

12. Échafaudage selon l'une des revendications 1 à 11, **caractérisé en ce que**, dans sa seconde position, l'élément de fixation (38) vient en prise, par l'arrière, avec la paroi (52) de la partie de montant (10) sur deux côtés opposés du premier évidement traversant de réception (14), perpendiculairement à l'axe longitudinal (30) du premier évidement traversant de réception (14) conçu en tant que premier orifice longitudinal (16).

13. Échafaudage selon l'une des revendications 1 à 11, **caractérisé en ce que**, dans sa seconde position, l'élément de fixation (38) vient en prise, par l'arrière, avec la paroi (52) de la partie de montant (10) sur deux côtés opposés du premier évidement traversant de réception (14), le long de l'axe longitudinal (30) du premier évidement traversant de réception (14) conçu en tant que premier orifice longitudinal (16).

14. Échafaudage selon l'une des revendications précédentes, **caractérisé en ce que** l'échafaudage (2) comprend un autre raccord (74) pour un support d'échafaudage (46).

15. Utilisation d'un premier évidement traversant de réception (14) dans un montant d'échafaudage (70) d'un échafaudage selon l'une des revendications précédentes pour relier un support d'échafaudage (46) au montant d'échafaudage (70).
